(19) Europäisches Patentamt
European Patent Office
Office européen des brevets

(11) EP 0 934 973 B1

(12) **EUROPEAN PATENT SPECIFICATION**

(45) Date of publication and mention of the grant of the patent:
**28.04.2004 Bulletin 2004/18**

(51) Int Cl.[7]: **C08L 7/00**, C08L 9/06, C08L 15/00, B60C 1/00

(21) Application number: **98830051.3**

(22) Date of filing: **06.02.1998**

(54) **Vulcanizable rubber composition, in particular for low rolling resistance treads of vehicle tires**

Vulkanisierbare Kautschukzusammensetzung für Reifenlaufflächen mit einem geringerem Rollwiderstand

Composition de caoutchouc vulcanisable pour bandes de roulement de pneumatiques présentant une faiblerésistance au roulement

(84) Designated Contracting States:
**BE DE ES FR GB IT LU PT**

(43) Date of publication of application:
**11.08.1999 Bulletin 1999/32**

(73) Proprietor: **PIRELLI PNEUMATICI S.p.A.**
**20126 Milano (IT)**

(72) Inventors:
- **Garro, Luciano**
  **20060 Ornago (Milano) (IT)**
- **Amaddeo, Angela**
  **81021 Arienzo (Caserta) (IT)**

(74) Representative: **Bottero, Claudio et al**
**Porta, Checcacci & Associati S.p.A.**
**Viale Sabotino, 19/2**
**20135 Milano (IT)**

(56) References cited:
**EP-A- 0 447 066** **FR-A- 2 526 030**

- **DATABASE WPI Section Ch, Week 9602 Derwent Publications Ltd., London, GB; Class A12, AN 96-017343 XP002070580 & JP 07 292 162 A (ASAHI KASEI KOGYO KK)**
- **PATENT ABSTRACTS OF JAPAN vol. 096, no. 004, 30 April 1996 & JP 07 330959 A (TOYO TIRE & RUBBER CO LTD), 19 December 1995,**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 934 973 B1

Printed by Jouve, 75001 PARIS (FR)

## Description

### Background of the invention

The present invention relates to a vulcanizable rubber composition of the type comprising a cross-linkable unsaturated chain polymer base, which has a preferred - but not exclusive - use in the production of treads for vehicle tires.

Moreover, the invention relates to a tread and to a tire obtainable starting from the aforesaid rubber composition, as well as to a process for reducing the rolling resistance of tires.

### Known art

In the field of vehicle tire manufacture, one of the more difficult objects to achieve has always been that of reducing the rolling resistance of the tire, achieving at the same time a good wear resistance and a satisfactory wet skid resistance.

The difficulties for achieving the aforementioned object essentially arise from the fact that the rolling resistance on the one hand and the wear resistance and wet skid resistance on the other hand are affected in an entirely opposite manner by the quantity of reinforcing filler - traditionally mainly constituted by carbon black - used in the rubber composition employed to manufacture the tire tread.

In order to reduce the rolling resistance of the tire, in fact, it would be desirable to reduce the amount of the carbon black-based reinforcing filler used in the rubber composition (for instance, below 70 parts per 100 parts by weight of the polymer base of the rubber composition): in so doing, however, a falling off to unacceptable values of both wet skid resistance and wear resistance of the tire has been observed.

In order to overcome somehow this limitation of the rubber compositions comprising carbon black as main reinforcing filler, the known art of the field has then suggested to partly or entirely replace carbon black by so-called "white" fillers, in particular silica, as is described for instance in European Patent application EP 0 501 227.

Even though silica-based reinforcing fillers have allowed to reduce the tire rolling resistance without significantly affecting wear resistance and wet skid resistance, their use is not devoid of drawbacks.

A first severe drawback which has been observed in the use of reinforcing fillers entirely or mainly constituted by silica is associated to the drastic increase in the volume electrical resistivity of the tire tread, which involves an undesired accumulation of electrostatic charges that may in some cases disturb the electronic apparatuses which are above the vehicle or even cause sudden electrical discharges of high potential.

In order to obviate somehow this drawback, it has then been proposed - for instance in European Patent application EP-A-0 658 452 of the same Applicant - to incorporate in the tread one or more conductive inserts, essentially constituted by sheets or strips of elastomeric material including carbon black, having a volume electrical resistivity that allows to ground the electrostatic charges accumulated during tire rolling.

To this end, said inserts radially extend throughout the whole thickness of the tread within which they are incorporated during the drawing operations, in order to perform the function of conductive connection of the ground with one of the belt layers or with the carcass ply, or also with a sidewall or another sufficiently conductive part of the tire.

However, although the use of conductive inserts substantially meets the above object, it is not free from drawbacks. Actually, the operations of simultaneously drawing the rubber compositions which constitute the tread and the inserts to be incorporated in the latter, are difficult to carry out with an ensuing complication of the production process.

Furthermore, in the finished tire, the contact zones between the rubber composition of the tread and the inserts radially extending through the same constitute as many zones that may trigger a premature and irregular wear of the tread itself.

A second severe drawback which has been observed in the use of reinforcing fillers entirely or mainly constituted by silica is associated to the difficulty of homogeneously and uniformly dispersing silica within the polymer base of the rubber composition. Actually, these reinforcing fillers have per se a poor affinity with the polymer base of the rubber compositions used in the manufacture of tires and require - as such - the use of suitable coupling agents that are able to chemically bind silica to the polymer matrix.

However, the need of using such coupling agents sets a limit to the maximum temperature that may be achieved during the steps of mixing and mechanically working the rubber composition, on pain of an irreversible thermal degradation of the coupling agent.

But the respect of the aforementioned temperature constraint involves a marked reduction in the very mechanical mixing action that is of the essential for an optimum dispersion of silica into the polymer matrix.

The ensuing insufficient and non homogeneous dispersion of silica in the rubber composition causes in its turn several drawbacks essentially related to the extreme variability and non homogeneity of the physico-mechanical

characteristics of the rubber composition from zone to zone.

More particularly, a remarkable drawing difficulty and a dimensional variability of the tread obtained starting from the so produced rubber compositions have been observed during the manufacture of treads starting from rubber compositions including silica as main reinforcing filler.

To all these drawbacks, the not negligible abrasion action of silica on the moving parts and, in general, on the body of the mixing apparatuses used in the production of the rubber composition, which causes an increase in maintenance costs, must be also added.

Lastly, it should be observed that by using reinforcing fillers entirely or mainly constituted by silica, the overall production cost of the finished tire increases to a not negligible extent either because of the much higher cost of silica compared to carbon black, and the necessity to use suitable and expensive coupling agents capable of chemically binding silica to the polymer. matrix of the rubber composition.

To try to obviate the drawbacks related to the use of silica as main reinforcing filler, it has then been suggested to use both carbon black and silica, dispersing each of said fillers in a corresponding polymer, as disclosed in European Patent application EP-A-0 763 558.

In this way, a substantially heterogeneous rubber composition is obtained in which a first polymer phase wherein carbon black is mainly dispersed and a second polymer phase wherein silica is mainly dispersed may be distinguished.

However, by proceeding according to the teaching of the aforesaid patent application remarkable difficulties are observed as concerns silica dispersion in its own polymer phase, in particular if low-molecular-weight, low-viscosity polymers are used, such as solution-SBR synthetic rubbers.

Furthermore, the necessary mechanical mixing action, essential for an optimum dispersion of silica in its own polymer phase, causes also in this case an undesired marked abrasion action on the machine casings and on the moving parts of the mixing apparatuses, with an increase in maintenance costs.

Finally, it has been proposed by Japanese patent application JP-A-7 292162 to provide a tire rubber composition which possesses an improved rolling resistance characteristics, low shrinkage and good processability and which contains:

(A-1) a starting material rubber comprising 30-95 wt % styrene-butadiene copolymer which satisfies the following conditions (a) to (c): (a) the molecules have carbon-tin bonds obtained by reaction between a tin compound expressed by the general formula R(4-i)SnXi (where R is a C1-12 alkyl or aryl group, i is an integer from 1 to 4, and X is chlorine or bromine) and a living polymer with active lithium ends obtained by copolymerizing styrene-butadiene in a hydrocarbon solvent using an organolithium compound as an initiator, (b) the bound styrene/bound butadiene weight ratio is 5/95 to 50/50, and (c) the Mooney viscosity (ML 1+4, 100°C) is 25-80, and

(A-2) 5-70 wt % at least one type of diene polymer rubber selected from natural rubber, polyisoprene rubber, polybutadiene rubber, and styrene-butadiene copolymer rubber having a bound styrene/bound butadiene weight ratio of 2/98 to 50/50;

(B) 5-50 weight parts reinforcing silica filler;

(C) 5-50 weight parts reinforcing carbon black;

(D) 30-100 weight parts of reinforcing silica fillers and reinforcing carbon black combined together;

(E) 0.1-20 weight parts silane coupling agent;

(F) 0.1-10 weight parts organic fatty acid;

(G) 1-50 weight parts rubber extender oil; and

(H) 1-5 weight parts vulcanizing agent.

Summary of the invention

Therefore, the technical problem underlying the present invention is that of providing a rubber composition including both carbon black and silica as reinforcing fillers, which allows on the one hand to reduce the rolling resistance of the tire without affecting the wear resistance and wet skid resistance thereof, and is free, on the other hand, from the drawbacks mentioned with reference to the cited prior art.

According to a first aspect of the invention, the aforementioned problem is solved by a vulcanizable rubber composition as defined in claim 1.

According to the present invention, it has been surprisingly found that thanks to the claimed combination of features it is possible to achieve both a good rolling resistance of the tread, and suitable characteristics of wear resistance and wet skid resistance, without being affected by the drawbacks associated to the use of silica-based reinforcing fillers, namely non homogeneity of the physico-mechanical characteristics of the rubber composition, drawing difficulties and low electrical conductivity.

More particularly, it has been found that said advantageous features are achieved thanks to the fact that said first modified copolymer has a greater affinity with carbon black and is able as such to allow an optimum and homogeneous dispersion of the latter in the rubber composition even in the presence of silica.

Even though the exact interaction mechanism between the polymer chains of the first modified copolymer and carbon black has not been entirely clarified, it is supposed - without intending to limit in any way the scope of the invention - that more stable bonds - presumably also of the covalent type - may be formed between the carbon black and the polymer chains.

Even though the first modified copolymer allows a preferred dispersion of carbon black, it has been found that both reinforcing fillers (carbon black and silica) result to be homogeneously dispersed within the polymer base.

With regard to this, it is supposed - without intending to limit in any way the scope of the invention - that the improved dispersion of silica which has been observed in the rubber compositions of the invention may be ascribed to the combined action exerted by the first modified copolymer and by the carbon black on the rheologic properties of the rubber composition, allowing to impart to the latter during the step of filler incorporation higher shearing stresses as compared to those achievable with a conventional rubber composition.

Thus, the rubber composition of the invention advantageously allows to obtain an optimum dispersion of silica even without adopting during the manufacture of the rubber composition all those special precautions adapted to achieve low values of the projected mean area of the aggregates (7,000-8,400 $nm^2$), as taught by the above-identified European patent application EP-A- 501 227.

In the following description and in the appended claims, the terms: "homogeneously dispersed fillers" are intended to indicate fillers such that the percentage of filler forming within the rubber composition aggregates of a size greater than 7 μm is preferably lower than 3%.

In other words, within the ambit of the present invention the fillers are considered to be homogeneously dispersed when - using an optical microscope having a resolution of at least 7 μm - no "islands" or domains wherein carbon black and silica preferentially accumulate may be distinguished in the rubber composition.

In a particularly preferred embodiment, the percentage of filler forming aggregates with a size greater than 7 μm within the rubber composition is lower than 1%. In such case, optimum properties of abrasion resistance of the vulcanized rubber composition have been found.

For the purposes of the invention, the conjugated diolefin preferably used in said first and second copolymers is selected from the group comprising: 1,3-butadiene, isoprene, 2,3-dimethyl-1,3-butadiene, 1,3-pentadiene, 1,3-hexadiene, and mixtures thereof, while the vinyl aromatic hydrocarbon of preferred use is selected from the group comprising: styrene, α-methyl-styrene, p-methyl-styrene, vinyl-toluene, vinyl-naphthalene, vinyl-pyridine, and mixtures thereof.

Preferably, the above first and second copolymers are obtained by solution polymerization of the conjugated diolefin with the vinyl aromatic hydrocarbon. Still more preferably, the above first and second copolymers are obtained by solution polymerization of 1,3-butadiene and styrene, by known methods.

In a particularly preferred embodiment, at least one of the above first and second copolymers is of the so-called "high-vinyl" type, i.e. it is obtainable by polymerizing in 1,2-form at least 50% by weight of the conjugated diolefin with said at least one vinyl aromatic hydrocarbon, in such a way as to have an olefin fraction having a 1,2 structure in a quantity comprised between 30% and 70% by weight to the total weight of the copolymer.

In the following description and in the appended claims, the term: "1,2-polymerization" is intended to indicate a particular stereospecific polymerization process between the conjugated diolefin and the vinyl aromatic hydrocarbon by means of which the formation of a copolymer is obtained in which the olefin fraction comprises a prefixed quantity of side-chain vinyl groups $-CH=CH_2$ bonded to the polymer chain.

Processes for the 1,2-polymerization of conjugated olefins are well known in the art and are described for instance in U.S. Patents 3,451,988 and 4,264,753.

More particularly, when the first copolymer is of the so-called "high vinyl" type optimum characteristics of homogeneity of the rubber composition and the best compromise between tire rolling resistance on the one hand, and good wear resistance and adequate wet skid resistance on the other hand, have been found.

This result is all the more surprising by considering that high vinyl copolymers fall among those that the known art exclusively suggests to use in association with silica-based fillers, i.e. those very fillers that are delegated to replace carbon black, but not with carbon black per se.

In this regard, see for instance the article "Comparison of the Elastomer Filler Interaction between Chemically Modified and Emulsion SBR with Carbon Black and Silica Fillers", by Ayala et al., delivered at the meeting of the American Chemical Society, Rubber Division, held in Cleveland, Ohio, USA, from 17 to 20 October 1995.

From the experimental results mentioned in such article, in fact, it may be inferred that a high content of vinyl groups in the polymer base has a deleterious effect on rolling resistance of the rubber compositions including carbon-black, which drops to unacceptable values (see for instance Table VIII).

Preferably, the aforesaid first and second copolymers of the invention conjugated diolefin/vinyl aromatic hydrocarbon are obtained by polymerizing in 1,2-form a quantity of conjugated diolefin comprised between 60 and 70% by weight to the total weight of the diolefin employed in the polymerization.

Preferably, furthermore, the aforesaid first and second copolymers conjugated diolefin/vinyl aromatic hydrocarbon are obtained by using a quantity of vinyl aromatic hydrocarbon not greater than 25% by weight to the total weight of the conjugated diolefin and of the same hydrocarbon.

As a consequence of this, the olefin fraction of the resulting copolymers preferably comprises a quantity of 1,2-structure ranging between 40% to 60% by weight to the total weight of the same copolymer.

In the following description and in the appended claims, the term: "1,2-structure" is intended to indicate the part of the olefin fraction of the copolymer conjugated diolefin/vinyl aromatic hydrocarbon formed by the following repeating unit:

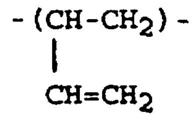

According to the invention, the rolling resistance of a tire obtainable starting from the rubber composition of the invention may be adequately reduced by using in the rubber composition the aforesaid first modified copolymer.

In an embodiment, the first modified copolymer conjugated diolefin/vinyl aromatic hydrocarbon is a so-called "terminated" copolymer.

In the present description, the terms: "terminated" copolymer, are used to indicate a copolymer obtainable by means of a polymerization reaction of the conjugated diolefin with a vinyl aromatic hydrocarbon in the presence of an organic metal initiator and by subsequent reaction of the so obtained intermediate copolymer with a suitable chain-terminating compound selected from the group comprising: substituted imines, a tin halogenated compound, at least one benzophenone compound having the following structural formula:

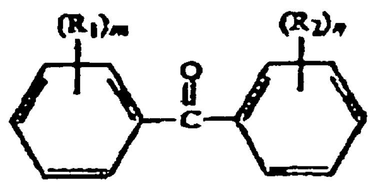 (I)

wherein $R_1$ and $R_2$ are hydrogen, halogen, an alkyl group, an alkenyl group, an alkoxy group, an amine group, an alkylamine or a dialkylamine group, and m and n are an integer from 1 to 10,
and mixtures thereof.

The substituted imines of preferred use are selected from the group comprising the imines having the following structural formula:

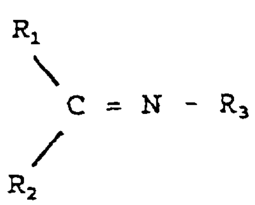 (II)

wherein $R_1$ and $R_2$ are selected from the group comprising H, alkyl, cycloalkyl, aryl, dialkylaminoaryl, aralkyl groups,

and alkyl, cycloalkyl, aryl, aralkyl groups containing aprotic O, N and S atoms; $R_3$ is selected from the group comprising alkyl, cycloalkyl, aryl, dialkylaminoaryl, aralkyl, and alkyl, cycloalkyl, aryl, aralkyl groups containing aprotic O, N and S atoms; at least one of said $R_1$, $R_2$ and $R_3$ groups being a dialkylaminoaryl group, the compounds wherein said $R_1$, $R_2$ and $R_3$ groups are simultaneously aryl groups being excluded.

Benzophenone compounds suitable for the purposes of the invention may be prepared according to processes known in the art, such as for instance those described by U.S. Patent no. 4,550,142.

For the purposes of the invention, the benzophenone compounds of preferred use are: benzophenone, 4,4'-bis (dimethylamino) benzophenone, 4,4'-bis(diethylamino)benzophenone, 4-diethylaminobenzophenone, 4,4'-bis(dibutylamino)benzophenone, 4,4'-diaminobenzophenone, 4,dimetylaminobenzophenone, 4,4'-diethoxybenzophenone, 3,4-dimethoxybenzophenone, 4,4'-dimethylbenzophenone, 3,3'-dicyclobenzophenone, 4-methyl-4'-methoxybenzophenone, 2,2',3,3'-tetramethylbenzophenone, 2,2'-dichlorobenzophenone, either alone or in mixture with one another.

Among the aforesaid benzophenone compounds, those having at least one amino, alkylamino or dialkylamino group either on one or both of the benzene rings are particularly preferred.

The terminated copolymers of the invention may be prepared according to processes known in the art, such as for instance those described in European Patent application EP-A-0 451 604.

In an alternative embodiment, the first modified copolymer conjugated diolefin/vinyl aromatic hydrocarbon is a so-called "coupled" copolymer.

In the present description, the terms: "coupled" copolymer, are used to indicate a copolymer obtainable by polymerization of the conjugated diolefin with a vinyl aromatic hydrocarbon in the presence of an organic metal initiator and subsequent coupling of the polymer chains with a suitable chain-coupling compound, preferably comprising at least one tin halogenated compound with the primary object of increasing the molecular weight of the copolymer thus obtained.

Coupled copolymers of preferred use may be prepared by processes known in the art, such as for instance those disclosed by U.S. Patent no. 4,742,124.

Both in the case of terminated copolymers and in the case of coupled copolymers, the organic metal initiator is preferably selected from the group comprising: polyfunctional organic lithium initiators, monofunctional organic lithium initiators in association with polyfunctional monomers, and mixtures thereof.

Tin halogenated compounds of preferred use are selected from the group comprising: dimethyl dichlorotin, dibutyl dichlorotin, tin tetrachloride, tributyl chlorotin, butyl trichlorotin, methyl trichlorotin, tin dichloride, and mixtures thereof.

A further and advantageous reduction in the tire rolling resistance may be achieved by using in the rubber composition a coupled and terminated modified copolymer, i.e. in which the copolymer obtained after coupling with the halogenated tin compound is caused to react with a suitable chain-terminating agent, such as for instance one of the aforementioned preferred agents.

In this case and as will be more apparent in the following description, the best results in terms of rolling resistance reduction have been observed.

In an embodiment of the invention, the second copolymer may be a copolymer suitably modified by means of silane groups Si-O- having chemical and structural features, as well as preparation techniques known per se, such as for instance those disclosed by European patent application EP-A-0 447 066.

Preferably, the second copolymer comprising silane groups has a glass transition temperature not lower than -50°C and is obtainable by polymerization in the presence of an organic metal initiator of a 1,3-butadiene or a 1,3-butadiene and styrene copolymer with a silane compound having the following structural formula:

$$X_i\text{-Si-}(OR)_j\text{-}R'_{4-i-j} \qquad \text{(III)}$$

wherein X is a halogen atom selected from the group comprising chlorine, bromine and iodine, R and R' are independently an alkyl group, an aryl group, a vinyl group or a halogenated alkyl group having from 1 to 20 carbon atoms, j is an integer comprised between 1 and 4, i is an integer comprised between 0 and 2, the sum of i and j ranging between 2 and 4.

Preferably, the aforesaid silane compound comprises non-hydrolytic OR groups, i.e. the OR group is a non-hydrolytic alkoxy, aryloxy or cycloalkoxy group having from 4 to 20 carbon atoms. Preferably, the R radical in the OR group is a hydrocarbon residue wherein 3 carbon atoms are bonded to a carbon atom in α-position, a hydrocarbon residue having not less than one carbon atom which is bonded in β-position to a carbon atom or an aromatic hydrocarbon residue, such as for instance a phenyl or tolyl group.

Among the alkoxy group-comprising silane compounds suitable for the purposes of the invention, those preferred are tetrakis(2-ethylethoxy)silane, tetraphenoxy silane, methyltris(2-ethylethoxy)silane, ethyltris(2-ethyhethoxy)silane, ethyltrisphenoxy silane, vinyltris(2-ethylhexylethoxy)silane, vinyltriphenoxy silane, methylvinylbis(2-ethylhexyletoxy)silane, ethylvinylbiphenoxy silane, monomethyltriphenoxy silane, dimethyldiphenoxy silane, monoethyltriphenoxy silane, diethyldiphenoxy silane, phenyltriphenoxy silane, diphenyldiphenoxy silane.

Among the aryloxy group-comprising silane compounds suitable for the purposes of the invention those preferred are tetraphenoxy silane, ethyltriphenoxy silane, vinyltriphenoxy silane, dimethyldiphenoxy silane, monoethyltriphenoxy silane, diethyldiphenoxy silane, phenyltriphenoxy silane, diphenyldiphenoxy silane.

Suitable silane compounds comprising a halogen atom and a non-hydrolytic OR group with 4 carbon atoms comprise tri-t-butoxy-monochloro silane, dichloro-di-t-butoxy silane, di-t-butoxy-diiodo silane, while suitable silane compounds comprising a halogen atom and a non-hydrolytic OR group with 5 carbon atoms comprise triphenoxymonochloro silane, monochloromethyldiphenoxy silane, monochloromethylbis(2-ethylhexyloxy) silane, monobromoethyldiphenoxy silane, monobromovinyldiphenoxy silane, monobromoisopropenylbis(2-ethylhexyloxy) silane, ditolyloxydichloro silane, diphenoxydiiodo silane, methyltris(2-methylbutoxy) silane, vinyltris(2-methylbutoxy) silane, vinyltris (3-metylbutoxy) silane, tetrakis(2-ethylhexyloxy) silane, tetraphenoxy silane, methyltris(2-ethylhexyloxy) silane, ethyltriphenoxy silane, vinyltris(2-ethylhexyloxy) silane, vinyltriphenoxy silane, methylvinylbis(2-ethylhexyloxy) silane, ethylvinyldiphenoxy silane.

Suitable silane compounds comprising a halogen atom and an OR aryloxy group include triphenoxymonochloro silane, monochloromethyldiphenoxy silane, monobromoethyldiphenoxy silane, ditolyldichloro silane, diphenoxydiiodo silane.

Among these silane compounds, those wherein i is 0 or 1, in particular tetraphenoxy silane and monomethyltriphenoxy silane, are preferred.

For the purposes of the invention, the silane compounds may be used either alone or in mixture with one another.

Preferably, the weight ratio between the aforesaid first modified copolymer and the second copolymer of the polymer base in the rubber composition of the invention is comprised between 30:70 and 70:30.

Still more preferably, the weight ratio between said polymers is comprised between 35:65 and 50:50. In this way, an optimal performance of the tread, as a function of the relative quantity of carbon black and silica, in terms of kilometric yield and low rolling resistance was found.

In order to impart an optimum kilometric yield to the tread obtainable from the rubber composition of the invention, the polymer base preferably comprises 1,3-polybutadiene in a quantity comprised between 0 and 40% by weight to the total weight of the same.

In a further embodiment and in order to improve the workability characteristics of the rubber composition, the polymer base may comprise, either in the presence or in the absence of 1,3-polybutadiene, a quantity comprised between 0 and 40% by weight, to the total weight of the same, of at least one polymer selected from the group comprising: polyisoprene, natural rubber and mixtures-thereof.

With regard to the use of natural rubber as third polymer in the composition, is must be observed that the presence of at least one high vinyl copolymer in the rubber composition of the invention advantageously allows to limit a particular degradation phenomenon of the rubber composition - the so-called "reversion" - which comes up in a more or less marked form during the vulcanization of natural rubber.

Thanks to the presence of at least one high vinyl copolymer, the rubber composition of the invention may therefore be vulcanized, contrary to what happens with the rubber compositions of conventional type including natural rubber, with vulcanizing systems having a high sulfur content which have an improving effect on both the rolling resistance and on the fatigue resistance of the vulcanized product.

According to an aspect of the invention, in order to impart to the tread obtainable with the rubber composition of the invention resistivity properties such as not to cause any substantial accumulation of electrostatic charges, the total quantity of the carbon black-based first reinforcing filler must be such that the volume electrical resistivity of the vulcanized composition, measured according to UNI standards 4288-72, is not higher than $1x10^{-6}$ Ohmxcm.

In order to ensure such volume resistivity values, the quantity of carbon black may be comprised, depending on the type of black used, between 30 and 70 parts by weight per each 100 parts by weight of polymer base (phr).

In a further embodiment of the invention, it is also possible to reduce the quantity of carbon black down to 15-30 phr, using carbon blacks known, per se having a high electrical conductivity, such as for instance the carbon blacks marketed by 3M under the trade name of ENSACO™.

The types of carbon blacks conventionally used in the art and utilizable in the rubber composition of the invention are those indicated according to ASTM standards under the designations N110, N121, N220, N231, N234, N242, N239, N299, N315, N236, N330, N332, N339, N347, N351, N358 and N375.

According to the invention, however, it has quite unexpectedly been found that thanks to the use of a carbon black-based reinforcing filler having particular characteristics of "structure" or aggregation degree of the particles and of surface area, it is possible to reduce the quantity of carbon black, to the advantage of a reduced rolling resistance, while keeping the characteristics of wet skid, wear resistance and of volume electrical resistivity at more than satisfactory values.

As to the structure, it has been found that optimum results - with regard to wet skid resistance and wear resistance - may be obtained when the carbon black of the invention shows a high "structure" (i.e. a high aggregation degree), which is however rather easily disgregable, giving aggregates having a lower structural complexity.

From the experimental point of view, these characteristics may be correlated to the capacity of carbon black of absorbing a particular sterically hindered molecule - namely, dibutylphthalate - and, respectively, to the reduction of said absorption capacity after a suitable mechanical action of controlled destructuration.

Based on such correlation, the higher is the "structure" of a carbon black, the greater is the absorption value of dibutylphthalate (in the following DBP), while the more marked is the tendency to disgregate, the more consistent is the reduction of the DBP absorption value following controlled destructuration (in the following ΔDBP).

The high structure carbon black of the invention shows - as such - a DBP absorption value, measured according to the standards ISO 4656-1, equal to at least 110 ml/100 g and a reduction in the DBP absorption value (ΔDBP), measured after compression according to the standards ISO 6894, equal to at least 25 ml/100 g.

Preferably, the carbon black has a DBP absorption value, measured according to ISO 4656-1, of from 130 to 160 ml, and a reduction in the DBP absorption value (ΔDBP), measured after compression according to ISO 6894, of from 30 to 50 ml/100 g.

As to the surface area, it has been found that optimum results - in terms of wet skid resistance and wear resistance - may be obtained when the carbon black of the invention has a limited surface area, i.e., comprises rather coarse particles.

From the experimental point of view, the surface area characteristics of carbon black particles may be correlated to the capacity of absorbing a particular molecule, the cetyl-trimethyl ammonium bromide or CTAB.

Based on such correlation, the higher is' surface area of a carbon black the greater is the absorption value of cetyl-trimethyl ammonium.

Owing to the inverse proportionality between surface area and particle size, there also ensues that the carbon black particles are the smaller the higher is the CTAB absorption value.

According to the invention the high structure carbon black has a surface area - as determined based on the absorption of cetyltrimethylammonium according to standards ISO 6810 (in the following CTAB absorption) - not greater than 120 $m^2/g$ and, preferably, comprised between 70 and 100 $m^2/g$.

According to an aspect of the invention, the rubber composition comprises a second silica-based reinforcing filler.

For the purposes of the invention a silica-based reinforcing filler of a type known per se may be used, such as for instance that disclosed in European Patent application EP-A-0 501 227.

Preferably, the second silica-based reinforcing filler has a BET surface area comprised between 100 and 300 $m^2/g$, a surface area measured by CTAB absorption according to ISO 6810 comprised between 100 and 300 $m^2/g$, a DBP absorption value measured according to ISO 4656-1 comprised between 150 and 250 ml/100g.

For the sole purpose of simplifying the present description, the silica-based fillers of the invention will be indicated in the following by the term: silica.

According to the invention, the total quantity of the second silica-based reinforcing filler should be such that the total quantity of reinforcing fillers (carbon black plus silica) is comprised between 50 and 100 parts by weight per each 100 parts by weight of polymer base.

Preferably, the total quantity of reinforcing fillers (carbon black plus silica) is comprised between 60 and 90 parts by weight per each 100 parts by weight of polymer base, while the weight ratio between carbon black and silica is comprised between 30:70 and 60:40.

On the basis of such correlation, therefore, the actual quantity of usable silica may be comprised between 20 and 60 phr, depending on the quantity of carbon black actually used, which, in its turns, depends on the characteristics of volume resistivity of the latter, as the vulcanized composition should respect the aforesaid limit of maximum volume resistance ($1x10^{-6}$ Ohmxcm).

In this way, an advantageous reduction in the tire rolling resistance may be achieved, while keeping an adequate volume electrical resistivity, a good wear resistance and a good wet skid resistance.

In a further embodiment, the rubber compositions of the invention preferably incorporate a suitable coupling agent that may chemically react with silica and bind the latter to the polymer base during the vulcanization of the same.

Preferred coupling agents are silane-based and have the following structural formula:

$$(R)_3\text{-Si-}C_nH_{2n}X \qquad \text{(IV)}$$

wherein:

R is an alkyl or alkoxy group comprising from 1 to 4 carbon atoms or a chlorine atom, n is an integer of from 1 to 6, and X is a group selected from $-Si_m-C_nH_{2n}-Si-(R)_3$, a nitroso group, a mercapto group, an amino group, an epoxy group, a vinyl group, an imido group, a chlorine atom, one or more atoms of sulfur, or a $S_mY$ group, wherein Y is selected from the following functional groups:

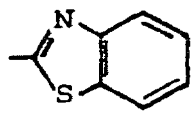

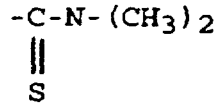

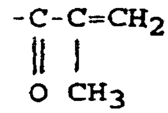

wherein m and n are an integer of from 1 to 6, and R is an alkyl or an alkoxy group comprising from 1 to 4 carbon atoms or a chlorine atom.

Particularly preferred among them is the silane coupling agent Si69® [bis(3-triethoxysilyl-propyl)tetrasulphide] (DEGUSSA) as such or in a suitable mixture with a small quantity of inert filler (for instance carbon black or the same silica), so as to facilitate its incorporation into the rubber composition, i.e. X50S (Degussa) (50% carbon black, 50% silane).

In addition to the aforementioned ingredients, the rubber composition of the invention incorporates one or more non cross-linking ingredients, known *per se,* necessary to impart to the rubber composition the necessary mechanical and workability characteristics.

Such ingredients, are in particular selected from the group comprising plasticizers, working adjuvants, antioxidants, age-retarding agents.

Furthermore, each of these ingredients is ,selected in quantities and proportions easily determinable by those skilled in the art.

The rubber composition is also rendered cross-linkable by adding and incorporating therein a suitable vulcanizing agent, possibly and preferably accompanied by suitable activators and vulcanization accelerators.

As said hereinabove, the vulcanizing agent of most advantageous use is sulfur, or sulfur-containing molecules (sulfur donors), with accelerators and activators well known to those skilled in the art.

Among the vulcanization activators, preferred is zinc stearate, directly formed in the rubber composition, by adding zinc oxide and stearic acid therein.

Solely by way of non limitative indication, Table I shown hereinafter illustrates the typical ingredients of a rubber composition according to the invention in parts by weight per each 100 parts by weight of polymer base (phr).

The aforementioned rubber composition may be obtained by means of quite conventional mixing operations, well known to those skilled in the art, which will be not described in detail.

According to a further aspect of the invention, a tread for vehicle tires is provided, in particular a premolded tread for covering worn tires, having a low rolling resistance a good wear resistance and wet skid resistance, and an adequate volume electrical resistivity, obtainable by forming and vulcanizing a vulcanizable rubber composition of the above described type.

A tread according to the invention is defined in claim 16.

Preferably, the tread of the invention has, after the vulcanizing step, a volume electrical resistivity not higher than $10^{-6}$ Ohmxcm, while being free from any means incorporated therein and adapted to prevent the accumulation of electrostatic charges, such as for instance the conductive inserts of the known art.

Preferably, the tread of the invention is formed by drawing, molding or calendering, at a temperature comprised between 80 and 120°C.

Advantageously, the tread - once vulcanized according to known operations - shows hysteretic characteristics which allow to achieve not only a reduction in rolling resistance, but also an adequate wet skid resistance.

According to some tests carried out by the Applicant, and as will be better apparent in the following description, the rolling resistance and wet skid resistance are correlated to the following dynamic properties of the treads:

E' = dynamic elastic modulus (measuring the energy retained and recovered during a cyclic deformation);

E'' = loss modulus (measuring the heat-dissipated energy during a cyclic deformation);

$$\tan\delta = E''/E'$$

Based on the tests carried out, the wet skid resistance of the tire is the better the higher is the value of tangδ measured at 0°C; while the rolling resistance is lower the lower is the value of tangδ measured at 70°C.

On the basis of the correlations between the characteristics of the tires and the dynamic properties discussed hereinabove, the treads and the tires of the invention preferably have a value of tangδ at 0°C higher than 0.50 and a value of tangδ at 70°C lower than 0.19.

According to a further aspect of the invention, a process is provided for the manufacture of tires for vehicle wheels, of the type comprising the steps of circumferentially providing around a carcass a tread externally provided with a rolling surface, and of linking by vulcanization said carcass to said tread, which is characterized in that said tread is obtained by forming a vulcanizable rubber composition of the above described type.

According to a further aspect, the present invention also relates to a tire for vehicle wheels whose tread shows a reduced rolling resistance, a good wear resistance and wet skid resistance, and an adequate volume electrical resistivity, as is defined in attached claim 21.

Furthermore, the tires of the invention subject to road-test and compared with tires entirely identical but incorporating a tread mainly including a silica-based reinforcing filler according to the prior art, have achieved a quite similar rolling resistance, while keeping substantially unchanged the values of wear resistance and wet skid resistance, and ensuring at the same time the absence of undesired accumulations of electrostatic charges, in the absence of conductive inserts and other means suitable to ground such charges.

Preferred tyres are defined in claims 22-24.

Therefore, according to a further aspect, the invention relates to a process to reduce the rolling resistance of a tire, as is defined in attached claim 25.

## Brief description of the drawings

Further features and advantages of the invention will be more readily apparent from the following description of some examples of vulcanizable rubber compositions, treads and tires according to the invention, made - solely by way of non limitative indication - with reference to the attached drawing, whose only figure shows a partly interrupted cross-section view of a tire according to the present invention.

## Detailed description of preferred embodiments

With reference to such figure, 1 indicates as a whole a tire conventionally comprising a toroidal carcass 2 having a crown portion 2a and including at least one carcass ply whose opposite side edges are externally bent around respective anchoring bead cores 3, incorporated each in a bead 4 defined along an inner circumferential edge of the tire, wherein the tire itself engages on a wheel rim 5 of a vehicle.

Along the circumferential development of the carcass ply one or more belt strips 6 made of textile or metal cords incorporated into a rubber composition sheet are applied.

Externally to the carcass ply 2, in respective opposed side portion thereof, a couple of sidewalls 7 is applied, each of which extends from bead 4 up to a so-called "shoulder" zone 8 of the tire, defined in correspondence of the opposed ends of the belt strips 6.

Onto the belt strips 6 a tread 9 is circumferentially applied whose side edges end in correspondence of the shoulders 8, joining with the sidewalls 7. Tread 9 has an external rolling surface 9a, designed to get in touch with the ground, wherein circumferential grooves 10 may be obtained, intercalated by transversal grooves, not shown in the attached figure, which define a plurality of tread blocks 11 variously distributed along said rolling surface 9a.

The above described tire 1 may be manufactured by means of a process including a plurality of production steps, conventional in themselves and known in the art.

More particularly, such process comprises the steps of preliminarly and independently preparing several semi-finished products corresponding to the different parts of the tire (carcass plies, belt strips, bead wires, fillings, sidewalls and treads) which are successively assembled to one another by a suitable assembling machine.

The subsequent vulcanization step then welds together the above semi-finished products to form a monolithic block, i.e. the tire.

Clearly, the step of preparing the above semi-finished products is preceded by a step of preparing and forming the corresponding rubber compositions.

In the tires of the invention, the tread 9 is produced by forming a vulcanizable rubber composition of the type described above.

EXAMPLE 1

(Invention)

In a closed rotor mixer (Banbury) model 11D of the company POMINI, which had been caused to rotate at a speed of about 40 r.p.m., the following ingredients were loaded in sequence:

- S-SBR-A = terminated and coupled butadiene/styrene copolymer, prepared in solution, having a 1,2-structure content equal to 57% by weight and a styrene content equal to 21% by weight, available on the market under the trade name of NS 116™ (Nippon Zeon);
- S-SBR-B = butadiene/styrene copolymer available on the market under the trade name BUNA VSL™ 5025-1 (Bayer);
- high-cis 1,3 polybutadiene available on the market under the trade name EUROPRENE™ NEOCIS (Enichem);
- carbon black = Vulcan 1380™ (Cabot Corporation);
- silica = BET 175 $m^2/g$, VN3 type (Degussa);
- solid silane coupling agent, including 50% carbon black, 50% bis(3-triethoxysilylpropyl)tetrasulfide = X50S (Degussa);
- stearic acid, aromatic type oil as plasticizer as well as other ingredients of common use in smaller amounts.

The structure and surface area characteristics of the carbon black used were the following:

- DBP (ISO 4656-1): 143 ml/100 g;
- compressed DBP (ISO 6894): 105 ml/100 g;
- CTAB (ISO 6810): 84 $m^2/g$.

With regard to the silane coupling agent used, it is possible to employ, as an alternative, silane coupling agents supplied in liquid form, obviously respecting the quantity of each ingredient, as specified in Table II hereinbelow.

The ingredients of the rubber composition so loaded were then submitted to intimate mixing for a lasting period of this first step equal to about 5 minutes.

During the mixing operations, the mechanical work imparted to the rubber composition was controlled, in order to keep its temperature at a value of about 150°-155°C.

In this way, a rubber composition wherein carbon black and silica resulted be homogeneously dispersed was obtained.

After cooling at room temperature, the so obtained rubber composition was loaded in a closed rotor mixer, model 11D, of the company POMINI, together with the following ingredients:

- age-retarding agent = 6PPD, also known under the trade name SANTOFLEX™ 13 (Monsanto);
- anti-fatigue agent = TMQ, also known under the trade name VULCANOX™ 4020 (Bayer);
- zinc oxide.

Also in this case, the rotors of the mixer were caused to rotate at about 40 r.p.m., so as to submit the rubber composition and the coupling agent to an intimate mixing, keeping the temperature of the rubber composition at a value of about 135°C.

After about 4 minutes of mixing, the rubber composition was discharged and, after cooling at room temperature, it was mixed with a vulcanizing system comprising sulfur and vulcanization accelerators well known in the art [diphenylguanidine DPG (Monsanto) and SANTOCURE™ NS (Monsanto)] in the same closed rotor mixer (Banbury) model 11D of the company POMINI, which was caused to rotate at about 20 r.p.m.

The rubber composition was then submitted to intimate mixing in order to disperse the vulcanizing system.

After about 4 minutes of mixing, taking care to keep the temperature of the rubber composition at a value of about 100°C, a vulcanizable rubber composition was discharged, having the composition shown in the following Table II.
In such a Table, the parts of each ingredient are expressed in phr.

EXAMPLE 2

(Invention)

According to the procedure described in the preceding Example 1, a rubber composition was prepared using - the other ingredients being equal - the following polymer base:

- S-SBR-A' = coupled butadiene/styrene copolymer, prepared in solution, having a 1,2-structure content equal to 62% by weight and a styrene content equal to 20% by weight, available on the market under the trade name SL563™ (JSR);

- S-SBR-B = butadiene/styrene copolymer available on the market under the trade name BUNA VSL™ 5025-1 (Bayer).

The resulting composition is shown in the following Table II.

EXAMPLE 3

(Invention)

According to the procedure described in the preceding Example 1, a similar rubber composition, except for the quantities of carbon black and silica, equal in this case to 24 and, respectively, to 37 phr, was prepared.
The resulting composition is shown in the following Table II.

EXAMPLE 4

(Comparison)

According to the procedure described in the preceding Example 1, a rubber composition of conventional type was prepared, in which - the other ingredients being equal - the following polymer base was used:

- S-SBR-B = butadiene/styrene copolymer available on the market under the trade name BUNA VSL™ 5025-1 (Bayer);

- high-cis 1,3 polybutadiene available on the market under the trade name EUROPRENE™ NEOCIS (Enichem).

The resulting composition is shown in the following Table II.

EXAMPLE 5

(Comparison)

According to the procedure described in the preceding Example 1, a rubber composition of conventional type was prepared, in which only silica as reinforcing filler was used and a polymer base comprising:

- S-SBR-B = butadiene/styrene copolymer available on the market under the trade name of BUNA VSL™ 5025-1 (Bayer);

- high-cis 1,3 polybutadiene available on the market under the trade name of EUROPRENE™ NEOCIS (Enichem).

The resulting composition is shown in the following Table II.

EXAMPLE 6

(Determination of the reinforcing filler dispersion)

A sample of each of the rubber compositions according to the preceding Examples 1-5 was submitted to vulcanization for 10' at 170°C, with methods and apparatuses known per se, and thereafter to several tests in order to evaluate the characteristics of dispersion homogeneity of the reinforcing fillers.

Such evaluation was performed using an optical microscope POLYVAR MET equipped with a JVC telecamera, so as to identify the filler aggregates having a size higher than 7 µm. More specifically, an analysis procedure of the images was used for a total of 40 tests by means of the "Image PROPLUS®" program supplied by Media Cibernetics (U.S.A.).

The tests made proved that while for the rubber compositions of Examples 1-4 the percentage of filler forming aggregates having a size higher than 7 µm was lower than 1%, for the rubber composition of Example 5 - incorporating only silica as reinforcing filler - the percentage of filler forming aggregates having a size higher than 7 µm was in the order of 4%.

In other words, the rubber composition of Example 5 does not meet the requirement of homogeneous dispersion of the reinforcing filler (silica) used, with a subsequent worsening in abrasion resistance, as will be seen in the following.

EXAMPLE 7

(Determination of the dynamic properties of the rubber composition)

A sample of each of the rubber compositions according to the preceding Examples 1-5 was submitted to vulcanization for 10' at 170°C, with methods and apparatuses known per se, and thereafter to several tests in order to evaluate the dynamic properties of the same.

More particularly, the tangδ values were determined according to the experimental methods described hereafter and using the apparatuses of the company INSTRON available on the market.

The values of tangδ were determined by submitting a cylindrical test piece of vulcanized rubber composition having a length of 25 mm and a diameter of 14 mm, subjected to compression preloading up to a longitudinal deformation of 25% of its original height and kept at prefixed temperature (0° or 70°C), to a dynamic sinusoidal deformation of a maximum width of ± 3.50% of the height under preloading, with a frequency of 100 cycles per second (100 Hz).

For the purposes of the present invention it is intended that all of the mentioned values of E', E'' and tangδ have been determined and should be determined according to the method described hereinabove.

The results of the tests carried out are reported in the following Table III, showing the mean values measured on three tests of the loss modulus E'' (MPa), the modulus of elasticity E' (MPa) and, respectively, of tangδ (dimensionless) at the temperatures of 0° and 70°C.

Taking into account that - on the basis of the tests carried out - the wet skid resistance of the tire turns out to be the better the higher is the value of tangδ measured at 0°C, and that the rolling resistance turns out to be the better the lower is the value of tangδ measured at 70°C, it is easy to infer from the data reported in Table III that the rubber compositions of the invention (Examples 1-3) achieve performances in terms of wet skid resistance and rolling resistance comparable to, or even higher than, those achieved by the comparative rubber compositions (Examples 4-5).

With regard to the performances shown by the comparative rubber composition of Example 4, entirely free from the first modified copolymer, it must be observed that the absence of said polymer causes a marked increase in rolling resistance.

EXAMPLE 8

(Determination of the volume resistivity properties of the rubber compositions)

A sample of each of the rubber compositions according to the preceding Examples 1-5 was submitted to vulcanization for 10' at 170°C, with methods and apparatuses known per se, and thereafter to several tests in order to evaluate the volume resistivity properties of the same.

The results of the tests carried out are reported in the following Table IV, showing the volume electrical resistivity of the various rubber compositions, determined according to the experimental procedures described in the standards UNI 4288-72.

As may be inferred from the values of the above table, the rubber compositions of comparative Example 5, including only silica as reinforcing filler, have a volume electrical resistivity well above the maximum tolerated value

($1x10^{-6}$ Ohmxcm) for an acceptable conductivity in a tire.

EXAMPLE 9

(Determination of the abradibility characteristics of the rubber compositions)

A sample of each of the rubber compositions according to the preceding Examples 1-5 was submitted to vulcanization with methods and apparatuses known per se, and thereafter to several tests in order to evaluate the abradibility characteristics of the same.
The tests were carried out according to the standard DIN 53516.
During the abradibility test, 110 $mm^3$ of material of the vulcanized rubber composition of Example 1, used as comparative rubber composition were abraded: hence, an abradibility index of 100 was attributed to the same.
Afterwards, the volumes of material abraded from the vulcanized samples of the rubber compositions of Examples 2-5 were measured, attributing a % increase of the index the higher was the volume abraded during the test.
In other words, the lower is the abradability index, the better is the abrasion resistance of the tested rubber composition.
The results of the tests carried out are shown in the following Table V.
The examination of the data reported in said table show that the rubber compositions of the invention (Examples 1-3) have abradibility characteristics higher than those of the known rubber compositions (Examples 4 and 5) and, as such, they are more than suitable to satisfy the abradibility properties required to a tread for vehicle tires.
With regard to the performances shown by the comparison rubber composition of Examples 4 and 5, it must be observed that the absence of the first modified copolymer (Example 4), together with the use of silica as single reinforcing filler (Example 5), cause a marked increase in abrasion resistance, to the full disadvantage of the kilometric yield of the tread produced using such rubber compositions.

EXAMPLE 10

(Road behavior)

With the rubber compositions obtained according to the preceding Examples 1-5, several treads were produced by drawing in conventional apparatuses, which treads were then used to assemble 195/65-15 size tires.
The tires so obtained were then submitted to standard tests, in order to evaluate their rolling resistance, wet skid resistance and abrasion resistance.

A. Evaluation of rolling resistance

This evaluation was carried out on each tire according to standards ISO 8767 and in particular to the so-called "Torque Method", reported under point 7.2.2. of the same, using conventional laboratory apparatuses.
The measurements were made at a constant speed of 80 km/h, while parasitic losses were measured according to the "Skim Reading" method reported under point 6.6.1. of the aforesaid standards ISO 8767.
In order to compare the rubber compositions of the invention with those of the prior art, the power loss in kg/t measured in the case of tires obtained starting from the rubber composition of Example 1 was attributed a rolling resistance index of 100.
Afterwards, the power losses of the tires obtained starting from the rubber compositions of Examples 2-5 were measured, attributing a % increase of the index parallel to the decrease of the power loss ascertained during the test.
In other words, the higher the index value, the lower the rolling resistance of the tire examined.
The results of the tests carried out are shown in the following Table VI.
From an examination of the data of the aforesaid table, it may be inferred that the tires of the invention (Examples 1-3) show a rolling resistance quite comparable to, or even better than, the rolling resistance measured on the tires of the prior art (Examples 4 and 5).

B. Evaluation of wet skid resistance

This evaluation was carried out at the test track of Vizzola, mounting the tires on Lancia K cars having a displacement of 2400 $cm^3$.
During the tests carried out, the performances of the tires obtained starting from the rubber compositions of the preceding Examples 1-5 were compared with those offered by conventional comparative tires, provided with treads

obtained from rubber compositions including E-SBR (styrene/butadiene copolymers obtained in emulsion), natural rubber and polybutadiene and incorporating carbon black as reinforcing filler (PIRELLI P6000™).

All the tires were tested by two independent test drivers, who afterwards attributed to the tires a feeling-rate of from 0 to 10 for each of the following judgment parameters: effort at steering wheel, gearing promptness, curve stability (both in oversteering and in understeering), compliance, curve release and controllability.

In order to compare the tires obtained from the rubber compositions of the preceding Examples 1-5 with the comparative ones (PIRELLI P6000™), an index of wet skid resistance equal to 100 was attributed to the overall evaluation expressed for the latter.

The evaluation of the tires obtained starting from the rubber compositions of Examples 1-5 involved a % variation of such index depending on the overall wet skid behavior of the tires examined.

The results of the tests carried out, expressed as mean values of the rates expressed by the two test drivers, are shown in the following Table VI.

As may be observed from the aforesaid table, the tires of the invention (Examples 1-3) have shown better performances than, or quite comparable to, the comparative tires (PIRELLI P6000™) and the tires of the prior art (Examples 4 and 5).

C. Evaluation of wear resistance

This evaluation was carried out mounting the tires on Lancia K cars having a displacement of 2400 $cm^3$ and driving through 20,000 km of a mixed course with a full-loaded car.

During the tests carried out, the performances of the tires obtained starting from the rubber compositions of the preceding Examples 1-5 were compared with those observed on conventional comparative tires (PIRELLI P6000™).

At the end of the 20,000 km course, the reduction in height of the tread blocks, proportional to the quantity worn off, was measured, attributing a wear resistance index equal to 100 for the PIRELLI P6000™ tires.

The evaluation of the tires obtained starting from the rubber compositions of Examples 1-5 involved a % variation of such index depending on the wear observed on the tested tires.

The results of the tests carried out are shown in the following Table VI.

As may be observed from the aforesaid table, the tires of the invention gave better performances than those of the comparative tires (PIRELLI P6000™) and of the prior art obtained from the rubber compositions of Examples 4 and 5.

TABLE I

| Ingredients | Quantity (phr) |
|---|---|
| first modified copolymer | 30 - 70 |
| second copolymer | 30 - 70 |
| natural rubber | 0 - 40 |
| 1,3-polybutadiene | 0 - 40 |
| polyisoprene | 0 - 40 |
| carbon black | 20 - 50 |
| silica | 70 - 20 |
| silica coupling agent | 0 - 6 |
| ZnO | 1 - 5 |
| stearic acid | 0 - 5 |
| anti-oxidants | 1 - 3 |
| anti-fatigue agents | 0.5 - 3 |
| sulfur or donors thereof | 0.5 - 3 |
| accelerators | 0.5 - 3 |
| plasticizers | 0 - 40 |

TABLE II

| Ingredients | Ex. 1 | Ex. 2 | Ex. 3 | Ex. 4 | Ex. 5 |
|---|---|---|---|---|---|
| S-SBR-A | 25 | - | 25 | - | - |
| S-SBR-A' | - | 25 | - | - | - |
| S-SBR-B | 50 | 50 | 50 | 77 | 77 |
| 1,3-polybutadiene | 25 | 25 | 25 | 23 | 23 |
| carbon black | 30 | 30 | 24 | 33 | - |
| silica | 30 | 30 | 37 | 33 | 60 |
| silica coupling agent (X50S) | 4.8 | 4.8 | 6 | 5.3 | 9.6 |
| ZnO | 2 | 2 | 2 | 2.2 | 2.5 |
| stearic acid | 2 | 2 | 2 | 2.2 | 2 |
| antioxidants | 2.5 | 2.5 | 2.5 | 2.7 | 3 |
| sulfur or donors thereof | 1.5 | 1.5 | 1.5 | 1.6 | 1.5 |
| accelerators | 2.5 | 2.5 | 2.7 | 2.7 | 3 |
| plasticizers | 8 | 8 | 8 | - | 8 |

TABLE III

| Properties | Ex. 1 | Ex. 2 | Ex. 3 | Ex. 4 | Ex. 5 |
|---|---|---|---|---|---|
| E' 0°C | 17 | 17 | 18 | 19 | 17 |
| E' 70°C | 6.4 | 6.8 | 7.2 | 6.9 | 7 |
| E" 0°C | 10.2 | 9.1 | 10.5 | 11 | 10 |
| E" 70°C | 0.9 | 0.85 | 0.92 | 1.2 | 0.95 |
| tang$\delta$ 0°C | 0.600 | 0.585 | 0.583 | 0.583 | 0.590 |
| tang$\delta$ 70°C | 0.140 | 0.135 | 0.127 | 0.170 | 0.137 |

TABLE IV

| Properties | Ex. 1 | Ex. 2 | Ex. 3 | Ex. 4 | Ex. 5 |
|---|---|---|---|---|---|
| Resistivity (K$\Omega$) | 1.12 | 1.12 | 1.01 | 1.67 | 5.6 $10^6$ |

TABLE V

| Properties | Ex. 1 | Ex. 2 | Ex. 3 | Ex. 4 | Ex. 5 |
|---|---|---|---|---|---|
| AB index | 100 | 100 | 102 | 110 | 130 |
| AB index = DIN abradibility index (higher is worse) | | | | | |

TABLE VI

| Properties | Ex. 1 | Ex. 2 | Ex. 3 | Ex. 4 | Ex. 5 |
|---|---|---|---|---|---|
| RR index | 100 | 102 | 105 | 96 | 103 |
| TSB index | 100 | 97 | 105 | 90 | 100 |

TABLE VI (continued)

| Properties | Ex. 1 | Ex. 2 | Ex. 3 | Ex. 4 | Ex. 5 |
|---|---|---|---|---|---|
| RU index | 100 | 100 | 100 | 90 | 95 |
| RR index = rolling resistance index (higher is better)<br>TSB index = wet skid resistance index (higher is better)<br>RU index = wear resistance index (higher is better) | | | | | |

**Claims**

1. A vulcanizable rubber composition comprising:

    a) a cross-linkable unsaturated chain polymer base including:

        a1) a first modified copolymer obtainable by polymerization of at least one conjugated diolefin with at least one vinyl aromatic hydrocarbon in the presence of an initiator comprising at least one organic metal group and subsequent modification by reacting the so obtained intermediate copolymer with a compound comprising functional groups capable of reacting with the organic metal groups of the copolymer and derived from the initiator, said first copolymer having a glass transition temperature comprised between 0° and -80°C, and comprising a total quantity of vinyl aromatic hydrocarbon comprised between 5% and 50% by weight to the total weight of the same;

        a2) a second copolymer obtainable by polymerization of at least one conjugated diolefin with at least one vinyl aromatic hydrocarbon, said second copolymer having a glass transition temperature comprised between 0° and -80°C, and comprising a total quantity of vinyl aromatic hydrocarbon comprised between 5% and 50% by weight to the total weight of the same;

    b) a first carbon black-based reinforcing filler having a dibutylphthalate (DBP) absorption value, measured according to ISO 4656-1 standards, equal to at least 110 ml/100 g, a reduction of dibutylphthalate (DBP) absorption value, measured after compression according to ISO 6894 standards, equal to at least 25 ml/100 g and a surface area, measured by cetyl-trimethyl ammonium bromide (CTAB) absorption according to ISO 6810 standards, not higher than 120 $m^2/g$, said first carbon black-based reinforcing filler being present in the composition in a quantity such that the volume electrical resistivity of the vulcanized rubber composition does not exceed $10^{-6}$ Ohmxcm;

    c) a second silica-based reinforcing filler in a quantity such that the sum of said first and said second reinforcing fillers is comprised between 50 and 100 parts by weight per 100 parts by weight of polymer base;

    said first and second reinforcing fillers being homogeneously dispersed in the polymer base such that the percentage of fillers forming within the rubber composition aggregates of a size greater than 7 μm is lower than 3%.

2. Rubber composition according to claim 1, **characterized in that** said conjugated diolefin is selected from the group comprising: 1,3-butadiene, isoprene, 2,3-dimethyl-1,3-butadiene, 1,3-pentadiene, 1,3-hexadiene, and mixtures thereof.

3. Rubber composition according to claim 1, **characterized in that** said vinyl aromatic hydrocarbon is selected from the group comprising: styrene, α-methyl-styrene, p-methyl-styrene, vinyl-toluene, vinyl-naphthalene, vinyl-pyridine, and mixtures thereof.

4. Vulcanizable rubber composition according to claim 1, **characterized in that** at least one of said first and second copolymers is obtainable by polymerizing in 1,2-form at least 50% by weight of the conjugated diolefin with said at least one vinyl aromatic hydrocarbon in such a way as to have an olefin fraction having a 1,2-structure in a quantity comprised between 30% and 70% by weight to the total weight of the copolymer.

5. Vulcanizable rubber composition according to claim 1, **characterized in that** said initiator comprising at least one

organic metal group is selected from the group comprising: polyfunctional organic lithium initiators, monofunctional organic lithium initiator in association with polyfunctional monomers, and mixtures thereof.

6. Vulcanizable rubber composition according to claim 1, **characterized in that** said compound comprising functional groups capable of reacting with the organic metal groups of the copolymer and deriving from the initiator is a chain-terminating compound selected from the group comprising: substituted imines, a tin halogenated compound, at least one benzophenone compound having the following structural formula:

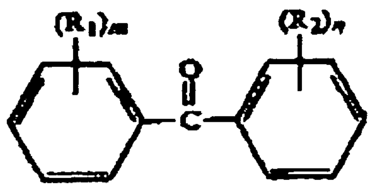

(I)

wherein $R_1$ and $R_2$ are hydrogen, halogen, an alkyl group, an alkenyl group, an alkoxy group, an amine group, an alkylamine or a dialkylamine group, and m and n are an integer from 1 to 10,
and mixtures thereof.

7. Vulcanizable rubber composition according to claim 1, **characterized in that** said compound comprising functional groups capable of reacting with the organic metal groups of the copolymer and deriving from the initiator is a chain-coupling compound comprising at least one tin halogenated compound.

8. Vulcanizable rubber composition according to claims 6 or 7, **characterized in that** said tin halogenated compound is selected from the group comprising: dimethyl dichlorotin, dibutyl dichlorotin, tin tetrachloride, tributyl chlorotin, butyl trichlorotin, methyl trichlorotin, tin dichloride, and mixtures thereof.

9. Vulcanizable rubber composition according to claim 1, **characterized in that** said second copolymer is a copolymer comprising silane groups having a glass transition temperature not lower than -50°C, obtainable by polymerizing in the presence of an organic metal initiator 1,3-butadiene or a 1,3-butadiene-styrene copolymer with a silane compound having the following structural formula:

$$X_i\text{-Si-(OR)}_j\text{-R'}_{4-i-j} \quad \text{(III)}$$

wherein X is a halogen atom selected from the group comprising chlorine, bromine and iodine, R and R' are independently an alkyl group, an aryl group, a vinyl group or a halogenated alkyl group having 1 to 20 carbon atoms, j is an integer comprised between 1 and 4, i is an integer comprised between 0 and 2, the sum of i and j ranging between 2 and 4.

10. Vulcanizable rubber composition according to claim 1, **characterized in that** the weight ratio between said first modified copolymer and said second copolymer is comprised between 30:70 and 70:30.

11. Vulcanizable rubber composition according to claim 1, **characterized in that** it further comprises 1,3-polybutadiene in a quantity comprised between 0 and 40% by weight to the total weight of the same.

12. Vulcanizable rubber composition according to claim 1, **characterized in that** it further comprises a quantity comprised between 0 and 40% by weight, to the total weight of the same, of at least one polymer selected from the group comprising: polyisoprene, natural rubber, and mixtures thereof.

13. Vulcanizable rubber composition according to claim 1, **characterized in that** said second silica-based reinforcing filler has a BET surface area comprised between 100 and 300 $m^2/g$, a surface area, measured by cetyl-trimethyl ammonium bromide (CTAB) absorption according to ISO 6810 standards, comprised between 100 and 300 $m^2/g$, a dibutylphthalate (DBP) absorption value, measured according to ISO 4656-1 standards, comprised between 150 and 250 ml/100 g.

**14.** Vulcanizable rubber composition according to claim 1, **characterized in that** it further comprises a suitable silica coupling agent.

**15.** Vulcanizable rubber composition according to claim 1, **characterized in that** the weight ratio between said first carbon black-based reinforcing filler and said second silica-based reinforcing filler is comprised between 30:70 and 60:40.

**16.** A low rolling resistance tread for vehicle tires, obtainable by the steps of forming and vulcanizing a vulcanizable rubber composition according to anyone of claims 1 to 15.

**17.** Tread according to claim 16, **characterized in that** it has a volume electrical resistivity value not higher than $10^{-6}$ Ohmxcm.

**18.** Tread according to claim 16, **characterized in that** it has a tangδ value at 0°C higher than 0.50.

**19.** Tread according to claim 16, **characterized in that** it has a tangδ value at 70°C lower than 0.19.

**20.** A process for manufacturing a tire for vehicle wheels of the type comprising the steps of circumferentially providing around a carcass a tread externally provided with a rolling surface, and of linking by vulcanization said carcass to said tread, **characterized in that** said tread is obtained by forming a vulcanizable rubber composition according to anyone of claims 1 to 15.

**21.** A tire for vehicles (1), comprising a toroidal carcass having a crown portion and two axially opposed sidewalls ending in respective beads for anchoring said tire to a corresponding assembly rim, and a tread crowning said carcass and externally provided with a rolling surface suitable to get in touch with the ground,
**characterized in that** said tread (9) is obtained from a vulcanizable rubber composition according to anyone of claims 1 to 15.

**22.** Tire for vehicles according to claim 21, **characterized in that** it comprises a tread having a volume electrical resistivity value not higher than $10^{-6}$ Ohmxcm.

**23.** Tire for vehicles according to claim 21, **characterized in that** it comprises a tread having a tangδ value at 0°C higher than 0.50.

**24.** Tire for vehicles according to claim 21, **characterized in that** it has a tangδ value at 70°C lower than 0.19.

**25.** Process for reducing the rolling resistance of tires, said tires being provided with a toroidal carcass having a crown portion and two axially opposed sidewalls ending in respective beads for anchoring said tire to a corresponding mounting rim, and a tread crowing said carcass and externally provided with a rolling surface suitable to get in touch with the ground,
**characterized in that** said tread of the tire is obtained from a vulcanizable rubber composition according to anyone of claims 1 to 15.

## Patentansprüche

**1.** Vulkanisierbares Kautschukgemisch, das folgende Komponenten umfasst:

a) eine vernetzbare, eine ungesättigte Kette aufweisende Polymerbasis, die ihrerseits folgende Komponenten umfasst:

a1) ein erstes modifiziertes Copolymer, erhältlich durch Polymerisation wenigstens eines konjugierten Diolefins mit wenigstens einem vinylaromatischen Kohlenwasserstoff in Anwesenheit eines Initiators, der wenigstens eine Organometallgruppe umfasst, und nachfolgende Modifizierung durch Umsetzung des so erhaltenen Intermediärcopolymers mit einer Verbindung, die funktionelle Gruppen aufweist, die zur Umsetzung mit den Organometallgruppen des Copolymers befähigt sind und vom Initiator abgeleitet sind, wobei das erste Copolymer eine Glasumwandlungstemperatur zwischen 0 und -80°C aufweist und eine Gesamtmenge an vinylaromatischem Kohlenwasserstoff zwischen 5 und 50 Gew.-%, bezogen auf das

Gesamtgewicht desselben, aufweist, und

a2) ein zweites Copolymer, erhältlich durch Polymerisation wenigstens eines konjugierten Diolefins mit wenigstens einem vinylaromatischen Kohlenwasserstoff, wobei das zweite Copolymer eine Glasumwandlungstemperatur zwischen 0 und -80°C aufweist und eine Gesamtmenge an vinylaromatischem Kohlenwasserstoff zwischen 5 und 50 Gew.-%, bezogen auf das Gesamtgewicht desselben, aufweist,

b) ein erster Verstärkerfüllstoff auf Rußbasis mit einem Dibutylphthalat (DBP)-Absorptionswert, gemessen nach den ISO 4656-1-Normen, von wenigstens 110 ml/100 g, einer Verminderung des Dibutylphthalat (DBP) -Absorptionswertes, gemessen nach Verdichten nach den ISO 6894-Normen, von wenigstens 25 ml/100 g und einer Oberfläche, gemessen durch Cetyl-trimethyl-ammoniumbromid (CTAB)-Absorption nach den ISO 6810-Normen, von höchstens 120 $m^2$/g, wobei der erste Verstärkerfüllstoff auf Rußbasis im Gemisch in einer Menge vorliegt, bei der der spezifische Volumenwiderstand des vulkanisierten Kautschukgemisches höchstens $10^{-6}$ Ohm x cm beträgt,

c) und ein zweiter Verstärkerfüllstoff auf Kieselerde-Basis in einer Menge, bei der die Summe aus ersten umd zweitem Verstärkerfüllstoff zwischen 50 und 100 Gew.-Teilen pro 100 Gew.-Teile der Polymerbasis liegt,

wobei der erste und zweite Verstärkerfüllstoff in der Polymerbasis gleichmäßig verteilt sind, so dass der Prozentanteil an Füllstoffen, der im Kautschukgemisch Aggregate mit einem Durchmesser von über 7 µm bildet, unter 3 % liegt.

2. Kautschukgemisch nach Anspruch 1, **dadurch gekennzeichnet, dass** das konjugierte Diolefin ausgewählt ist aus der Gruppe 1,3-Butadien, Isopren, 2,3-Dimethyl-1,3-butadien, 1,3-Pentadien, 1,3-Hexadien und Gemische davon.

3. Kautschukgemisch nach Anspruch 1, **dadurch gekennzeichnet, dass** der vinylaromatische Kohlenwasserstoff ausgewählt ist aus der Gruppe Styrol, α-Methyl-styrol, p-Methyl-styrol, Vinyl-toluol, Vinyl-naphthalin, Vinyl-pyridin und Gemische davon.

4. Vulkanisierbares Kautschukgemisch nach Anspruch 1, **dadurch gekennzeichnet, dass** wenigstens das erste oder zweite Copolymer durch Polymerisation in 1,2-Form bei wenigstens 50 Gew.-% des konjugierten Diolefins mit wenigstens einem vinylaromatischen Kohlenwasserstoff erhältlich ist, so dass eine Olefinfraktion mit einer 1,2-Struktur in einer Menge zwischen 30 und 70 Gew.-%, bezogen auf das Gesamtgewicht des Copolymers, vorliegt.

5. Vulkanisierbares Kautschukgemisch nach Anspruch 1, **dadurch gekennzeichnet, dass** der wenigstens eine Organometallgruppe umfassende Initiator ausgewählt ist aus der Gruppe, die polyfunktionelle Organolithiuminitiatoren, monofunktionelle Organolithiuminitiatoren in Verbindung mit polyfunktionellen Monomeren und Gemische davon umfasst.

6. Vulkanisierbares Kautschukgemisch nach Anspruch 1, **dadurch gekennzeichnet, dass** die Verbindung, die funktionelle Gruppen aufweist, die zur Umsetzung mit den Organometallgruppen des Copolymers befähigt sind und vom Initiator abgeleitet sind, eine Kettenabbruchverbindung ist, ausgewählt aus der Gruppe, die substituierte Imine, eine halogenierte Zinnverbindung und wenigstens eine Benzophenonverbindung der folgenden Strukturformel

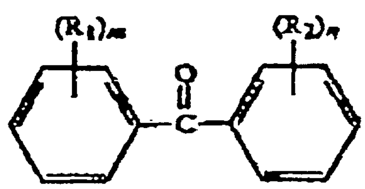

(I)

worin $R_1$ und $R_2$ Wasserstoff, Halogen, eine Alkyl-, eine Alkenyl-, eine Alkoxy-, eine Amin-, eine Alkylamin- oder eine Dialkylamingruppe bedeuten, und m und n eine ganze Zahl von 1 bis 10 bedeuten,
und Gemische davon umfasst.

7. Vulkanisierbares Kautschukgemisch nach Anspruch 1, **dadurch gekennzeichnet, dass** die Verbindung, die funktionelle Gruppen aufweist, die zur Umsetzung mit den Organometallgruppen des Copolymers befähigt sind und vom Initiator abgeleitet sind, eine Kettenabbruchverbindung ist, die wenigstens eine halogenierte Zinnverbindung umfasst.

8. Vulkanisierbares Kautschukgemisch nach den Ansprüchen 6 oder 7, **dadurch gekennzeichnet, dass** die halogenierte Zinnverbindung ausgewählt ist aus der Gruppe Dimethyldichlorzinn, Dibutyldichlorzinn, Zinntetrachlorid, Tributylchlorzinn, Butyltrichlorzinn, Methyltrichlorzinn, Zinndichlorid und Gemische davon.

9. Vulkanisierbares Kautschukgemisch nach Anspruch 1, **dadurch gekennzeichnet, dass** das zweite Copolymer ein Copolymer ist, das Silangruppen mit einer Glasumwandlungstemperatur von mindestens -50°C aufweist, erhältlich durch Polymerisation in Anwesenheit eines Organometllinitiators 1,3-Butadien oder eines 1,3-Butadien-Styrol-Copolymers mit einer Silanverbindung der folgenden Strukturformel:

$$X_i\text{-Si-(OR)}_j\text{-R'}_{4-i-j} \qquad \text{(III)}$$

worin X ein Halogenatom ist, ausgewählt aus der Gruppe Chlor, Brom und Iod, R und R' unabhängig voneinander eine Alkyl-, eine Aryl-, eine Vinylgruppe oder eine halogenierte Alkylgruppe mit 1-20 C-Atomen bedeuten, j eine ganze Zahl zwischen 1 und 4 und i eine ganze Zahl zwischen 0 und 2 darstellen, und die Summe aus i und j zwischen 2 und 4 liegt.

10. Vulkanisierbares Kautschukgemisch nach Anspruch 1, **dadurch gekennzeichnet, dass** das Gewichtsverhältnis zwischen dem ersten modifizierten Copolymer und dem zweiten Copolymer zwischen 30:70 und 70:30 liegt.

11. Vulkanisierbares Kautschukgemisch nach Anspruch 1, **dadurch gekennzeichnet, dass** es außerdem noch 1,3-Polybutadien in einer Menge von 0 bis 40 Gew.-%, bezogen auf das Gesamtgewicht desselben, umfasst.

12. Vulkanisierbares Kautschukgemisch nach Anspruch 1, **dadurch gekennzeichnet, dass** es außerdem noch eine Menge von 0 bis 40 Gew.-%, bezogen auf das Gesamtgewicht desselben, wenigstens eines Polymers umfasst, ausgewählt aus der Gruppe Polyisopren, Naturkautschuk und Gemische davon.

13. Vulkanisierbares Kautschukgemisch nach Anspruch 1, **dadurch gekennzeichnet, dass** der zweite Verstärkerfüllstoff auf Kieselsäurebasis eine nach dem BET-Verfahren ermittelte Oberfläche zwischen 100 und 300 $m^2$/g, eine Oberfläche, gemessen durch Cetyl-trimethyl-ammonium-bromid (CTAB)-Absorption nach den ISO 6810-Normen, zwischen 100 und 300 $m^2$/g und einen Dibutylphthalat (DBP)-Absorptionswert gemessen nach den ISO 4656-1-Normen, zwischen 150 und 250 ml/100 g aufweist.

14. Vulkanisierbares Kautschukgemisch nach Anspruch 1, **dadurch gekennzeichnet, dass** es außerdem noch ein geeignetes Kieselsäurekupplungsmittel umfasst.

15. Vulkanisierbares Kautschukgemisch nach Anspruch 1, **dadurch gekennzeichnet, dass** das Gewichtsverhältnis zwischen dem ersten und dem zweiten Verstärkerfüllstoff auf Rußbasis zwischen 30:70 und 60:40 liegt.

16. Einen geringen Rollwiderstand aufweisende Lauffläche für Kraftfahrzeugreifen, die man über die Stufen der Formgebung und Vulkanisation eines vulkanisierbaren Kautschukgemisches nach einem der Ansprüche 1 bis 15 erhält.

17. Lauffläche nach Anspruch 16, **dadurch gekennzeichnet, dass** sie einen spezifischen Volumenwiderstand von höchstens $10^{-6}$ Ohm x cm aufweist.

18. Lauffläche nach Anspruch 16, **dadurch gekennzeichnet, dass** sie einen tangδ-Wert bei 0°C von über 0,50 aufweist.

19. Lauffläche nach Anspruch 16, **dadurch gekennzeichnet, dass** sie einen tangδ-Wert bei 70°C von unter 0,19 aufweist.

20. Verfahren zur Herstellung eines Reifens für Kraftfahrzeugräder, das die Stufen des Aufbringens einer Lauffläche

auf den Umfang einer Karkasse, wobei erstere außen mit einer Rolloberfläche ausgestattet ist, und der Verbindung der Karkasse mit der Lauffläche durch Vulkanisation umfasst, **dadurch gekennzeichnet, dass** man die Lauffläche durch Formgebung eines vulkanisierbaren Kautschukgemisches nach einem der Ansprüche 1 bis 15 erhält.

**21.** Reifen für Kraftfahrzeuge, der eine ringförmige Karkasse mit einem Kronenanteil und zwei axial gegenüberliegende Seitenwände, die in den jeweiligen Wülsten zur Verankerung des Reifens auf einer entsprechenden Montagefelge enden, und eine die Karkasse krönende Lauffläche, die außen mit einer Rolloberfläche ausgestattet ist, die für den Kontakt mit dem Untergrund geeignet ist, umfasst,
**dadurch gekennzeichnet, dass** die Lauffläche aus einem vulkanisierbaren Kautschukgemisch nach einem der Ansprüche 1 bis 15 erhalten ist.

**22.** Reifen für Kraftfahrzeuge nach Anspruch 21, **dadurch gekennzeichnet, dass** er eine Lauffläche mit einem spezifischen Volumenwiderstand von höchstens $10^{-6}$ Ohm x cm umfasst.

**23.** Reifen für Kraftfahrzeuge nach Anspruch 21, **dadurch gekennzeichnet, dass** er eine Lauffläche mit einem tang$\delta$-Wert bei 0°C von über 0,50 umfasst.

**24.** Reifen für Kraftfahrzeuge nach Anspruch 21, **dadurch gekennzeichnet, dass** er einen tang$\delta$-Wert bei 70°C von unter 0,19 aufweist.

**25.** Verfahren zur Verminderung des Rollwiderstandes von Reifen, wobei diese mit einer ringförmigen Karkasse mit einem Kronenanteil und zwei axial gegenüberliegenden Seitenwänden, die in den jeweiligen Wülsten zur Verankerung des Reifens auf der entsprechenden Montagefelge enden, und einer die Karkasse krönenden Lauffläche, die außen mit einer Rolloberfläche ausgestattet ist, die für den Kontakt mit dem Untergrund geeignet ist, ausgestattet sind,
**dadurch gekennzeichnet, dass** die Lauffläche des Reifens aus einem vulkanisierbaren Kautschukgemisch nach einem der Ansprüche 1 bis 15 erhalten wird.

## Revendications

**1.** Composition à base de caoutchouc vulcanisable, qui comprend :

a) un polymère de base à chaîne insaturée, réticulable, comprenant :

a1) un premier copolymère modifié que l'on peut obtenir en polymérisant au moins une dioléfine conjuguée avec au moins un hydrocarbure aromatique vinylique, en présence d'un amorceur comprenant au moins un groupe organométallique, et en modifiant ensuite le copolymère intermédiaire ainsi obtenu en le faisant réagir avec un composé possédant des groupes fonctionnels capables de réagir avec les groupes organométalliques du copolymère, issus de l'amorceur, ledit premier copolymère ayant une température de transition vitreuse comprise entre 0 °C et -80 °C, et comprenant une proportion totale d'hydrocarbures aromatiques vinyliques comprise entre 5 % et 50 % en poids par rapport au poids total du copolymère,
a2) un second copolymère que l'on peut obtenir en polymérisant au moins une dioléfine conjuguée avec au moins un hydrocarbure aromatique vinylique, ledit second copolymère ayant une température de transition vitreuse comprise entre 0 °C et -80 °C, et comprenant une proportion totale d'hydrocarbures aromatiques vinyliques comprise entre 5 % et 50 % en poids par rapport au poids total dudit copolymère,

b) une première charge de renforcement, à base de noir de carbone, ayant un indice d'absorption de phtalate de dibutyle (PDB), mesuré selon la norme ISO 4656-1, égal à au moins 110 ml/100 g, une réduction de l'indice d'absorption de phtalate de dibutyle (PDB), mesurée après compression selon la norme ISO 6894, égale à au moins 25 ml/100 g, et une surface spécifique, mesurée par absorption de bromure de cétyltriméthylammonium (BCTA) selon la norme ISO 6810, ne dépassant pas 120 $m^2$/g,
ladite première charge de renforcement à base de noir de carbone étant présente dans la composition en une proportion telle que la résistivité électrique en volume de la composition à base de caoutchouc vulcanisé ne dépasse pas $10^{-6}$ Ohm x cm ;
c) une seconde charge de renforcement à base de silice, qui est présente en une quantité telle que la somme de la première charge de renforcement et de la seconde charge de renforcement est comprise entre 50 et 100 parties en poids pour 100 parties en poids de polymère de base,

ladite première charge de renforcement et ladite seconde charge de renforcement étant dispersées de manière homogène dans le polymère de base, de sorte que le pourcentage des charges formant au sein de la composition à base de caoutchouc des agrégats ayant une taille supérieure à 7 µm, est inférieur à 3 %.

**2.** Composition à base de caoutchouc selon la revendication 1, **caractérisée en ce que** ladite dioléfine conjuguée est choisie parmi le butadiène-1,3, l'isoprène, le diméthyl-2,3-butadiène-1,3, le pentadiène-1,3, l'hexadiène-1,3, et leurs mélanges.

**3.** Composition à base de caoutchouc selon la revendication 1, **caractérisée en ce que** ledit hydrocarbure aromatique vinylique est choisi parmi le styrène, l'α-méthylstyrène, le p-méthylstyrène, le vinyltoluène, le vinylnaphtalène, la vinylpyridine et leurs mélanges.

**4.** Composition à base de caoutchouc vulcanisable selon la revendication 1, **caractérisée en ce qu'**au moins l'un dudit premier copolymère et dudit second copolymère peut être obtenu par polymérisation en 1,2 d'au moins 50 % en poids de la dioléfine conjuguée avec ledit au moins un hydrocarbure aromatique vinylique, de manière à avoir une fraction oléfinique ayant une structure 1,2 en une proportion comprise entre 30 % et 70 % en poids par rapport au poids total du copolymère.

**5.** Composition à base de caoutchouc vulcanisable selon la revendication 1, **caractérisée en ce que** ledit amorceur comprenant au moins un groupe organométallique est choisi parmi les amorceurs organolithium polyfonctionnels, les amorceurs organolithium monofonctionnels en association avec des monomères polyfonctionnels, et leurs mélanges.

**6.** Composition à base de caoutchouc vulcanisable selon la revendication 1, **caractérisée en ce que** ledit composé possédant des groupes fonctionnels capables de réagir avec les groupes organométalliques du copolymère, issus de l'amorceur, est un agent de terminaison de chaîne, choisi parmi les imines substituées, les dérivés halogénés de l'étain, les benzophénones de formule développée suivante :

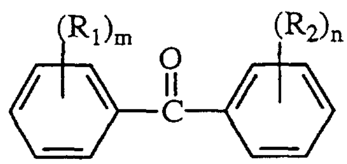

(I)

dans laquelle $R_1$ et $R_2$ représentent chacun un atome d'hydrogène, un atome d'halogène, un groupe alkyle, un groupe alcényle, un groupe alcoxy, un groupe amino, un groupe alkylamino, ou un groupe dialkylamino, et m et n désignent un nombre entier ayant une valeur de 1 à 10,
et leurs mélanges.

**7.** Composition à base de caoutchouc vulcanisable selon la revendication 1, **caractérisée en ce que** ledit composé possédant des groupes fonctionnels capables de réagir avec les groupes organométalliques du copolymère, issus de l'amorceur, est un agent de couplage de chaînes, comprenant au moins un dérivé halogéné de l'étain.

**8.** Composition à base de caoutchouc vulcanisable, selon la revendication 6 ou 7, **caractérisée en ce que** ledit dérivé halogéné de l'étain est choisi parmi le diméthyldichloroétain, le dibutyldichloroétain, le tétrachlorure d'étain, le tributylchloroétain, le butyltrichloroétain, le méthyltrichloroétain, le dichlorure d'étain et leurs mélanges.

**9.** Composition à base de caoutchouc vulcanisable selon la revendication 1, **caractérisée en ce que** ledit second copolymère est un copolymère comprenant des groupes silyle, ayant une température de transition vitreuse non inférieure à -50 °C, que l'on peut obtenir en polymérisant en présence d'un amorceur organométallique, du butadiène-1,3 ou un copolymère de styrène et de butadiène-1,3 avec un silane de formule développée suivante :

$$X_i — Si — (OR)_j — R'_{4-i-j} \qquad \text{(III)}$$

dans laquelle X représente un atome d'halogène choisi parmi les atomes de chlore, de brome et d'iode, R et R' représentent chacun indépendamment un groupe alkyle, un groupe aryle, un groupe vinyle ou un groupe alkyle halogéné, ayant 1 à 20 atomes de carbone, j désigne un nombre entier compris entre 1 et 4, i désigne un nombre entier compris entre 0 et 2, la somme de i et j ayant une valeur de 2 à 4.

**10.** Composition à base de caoutchouc vulcanisable selon la revendication 1, **caractérisée en ce que** le rapport en poids dudit premier copolymère modifié audit second copolymère est compris entre 30 :70 et 70 :30.

**11.** Composition à base de caoutchouc vulcanisable selon la revendication 1, **caractérisée en ce qu'**elle renferme en outre du polybutadiène-1,3 en une proportion comprise entre 0 et 40 % en poids par rapport à son poids total.

**12.** Composition à base de caoutchouc vulcanisable selon la revendication 1, **caractérisée en ce qu'**elle renferme en outre une proportion comprise entre 0 et 40 % en poids par rapport au poids total de la composition, d'au moins un polymère choisi parmi le polyisoprène, le caoutchouc naturel et leurs mélanges.

**13.** Composition à base de caoutchouc vulcanisable selon la revendication 1, **caractérisée en ce que** ladite seconde charge de renforcement à base de silice a une surface BET comprise entre 100 et 300 $m^2$/g, une surface spécifique, mesurée par absorption de bromure de cétyltriméthylammonium (BCTA) selon la norme ISO 6810, comprise entre 100 et 300 $m^2$/g, et un indice d'absorption de phtalate de dibutyle (PDB), mesuré selon la norme ISO 4656-1, compris entre 150 et 250 ml/100 g.

**14.** Composition à base de caoutchouc vulcanisable selon la revendication 1, **caractérisée en ce qu'**elle renferme en outre un agent de couplage de la silice, approprié.

**15.** Composition à base de caoutchouc vulcanisable selon la revendication 1, **caractérisée en ce que** le rapport en poids de ladite première charge de renforcement à base de noir de carbone à ladite seconde charge de renforcement à base de silice est compris entre 30 :70 et 60 :40.

**16.** Bande de roulement à faible résistance au roulement pour pneu de véhicule, que l'on peut obtenir en formant et en vulcanisant une composition à base de caoutchouc vulcanisable selon l'une quelconque des revendications 1 à 15.

**17.** Bande de roulement selon la revendication 16, **caractérisée en ce qu'**elle présente une résistivité électrique en volume qui ne dépasse pas $10^{-6}$ Ohm x cm.

**18.** Bande de roulement selon la revendication 16, **caractérisée en ce qu'**elle présente une valeur de tangente $\delta$ à 0 °C supérieure à 0,50.

**19.** Bande de roulement selon la revendication 16, **caractérisée en ce qu'**elle présente une valeur de tangente $\delta$ à 70 °C inférieure à 0,19.

**20.** Procédé de fabrication d'un pneu pour roue de véhicule, du type comprenant les étapes consistant à entourer la circonférence d'une carcasse d'une bande de roulement munie extérieurement d'une surface de roulement, et à lier par vulcanisation ladite carcasse à ladite bande de roulement, **caractérisé en ce que** l'on obtient ladite bande de roulement en formant une composition à base de caoutchouc vulcanisable selon l'une quelconque des revendications 1 à 15.

**21.** Pneu pour véhicule, qui comprend une carcasse toroïdale ayant une partie couronne et deux parois latérales axialement opposées, se terminant en des bourrelets respectifs pour l'ancrage dudit pneu dans une jante d'assemblage correspondante, et une bande de roulement couronnant ladite carcasse et pourvue extérieurement d'une surface de roulement, appropriée pour entrer en contact avec le sol,
**caractérisé en ce que** ladite bande de roulement est obtenue à partir d'une composition à base de caoutchouc vulcanisable selon l'une quelconque des revendications 1 à 15.

**22.** Pneu pour véhicule selon la revendication 21, **caractérisé en ce qu'**il comprend une bande de roulement ayant une résistivité électrique en volume qui ne dépasse pas $10^{-6}$ Ohm x cm.

**23.** Pneu pour véhicule selon la revendication 21, **caractérisé en ce qu'**il comprend une bande de roulement présentant une valeur de tangente δ à 0 °C supérieure à 0,50.

**24.** Pneu pour véhicule selon la revendication 21, **caractérisé en ce qu'**il présente une valeur de tangente δ à 70 °C inférieure à 0,19.

**25.** Procédé pour diminuer la résistance au roulement de pneus, lesdits pneus comprenant une carcasse toroïdale présentant une partie couronne et deux parois latérales axialement opposées, se terminant en des bourrelets respectifs pour l'ancrage dudit pneu dans une jante de montage correspondante, et une bande de roulement couronnant ladite carcasse et munie extérieurement d'une surface de roulement, appropriée pour entrer en contact avec le sol,
**caractérisé en ce que** ladite bande de roulement du pneu est obtenue à partir d'une composition à base de caoutchouc vulcanisable selon l'une quelconque des revendications 1 à 15.

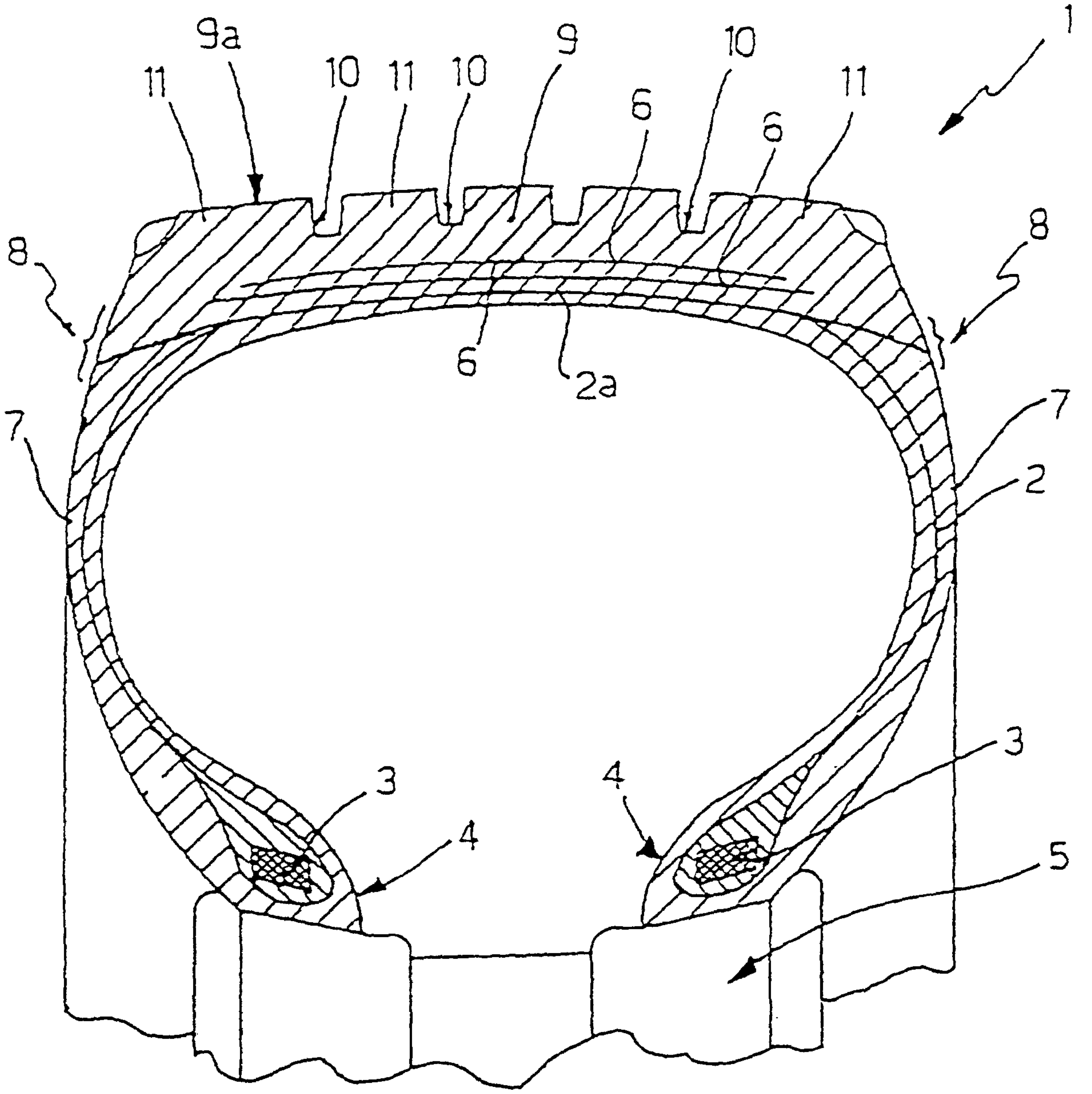


FIG.1